# EUROPEAN PATENT SPECIFICATION

(11) **EP 3 482 907 B1**
(45) Date of publication and mention of the grant of the patent: **08.03.2023**
(21) Application number: 18205963.4
(22) Date of filing: 13.11.2018
(51) Int. Cl.: B29C 48/692, B01D 29/09

(54) **FILTER APPARATUS OF MOLTEN PLASTIC MATERIAL**
VORRICHTUNG ZUR FILTERUNG VON GESCHMOLZENEM KUNSTSTOFFMATERIAL
APPAREIL DE FILTRAGE DE MATÉRIAU PLASTIQUE FONDU

(30) Priority: 13.11.2017 IT 201700128926
(43) Date of publication of application: 15.05.2019
(73) Proprietor: G.G.F. Plast S.r.l., 44012 Bondeno (Ferrara) (IT); Cofit International S.r.l., 20023 Cerro Maggiore (Milano) (IT)
(72) Inventor: FALZONI, Giorgio, 44049 Vigarano Pieve - Vigarano Mainarda (Ferrara) (IT)
(74) Representative: Dall'Olio, Christian

(56) References cited:
- US-A- 3 940 335
- US-A- 4 842 750
- US-B1- 6 216 880

## Description

The present invention relates to the technical sector of filtering, or filtration, of molten plastic material, in particular of plastic material and plastic recycling material.

It is known that plastic material can be recycled, in particular when dealing with processing scraps or non-compliant products; plastic packaging can also be recycled following cleaning up. To be certain of the processability of the plastic material it is necessary to separate the plastic material from all solid components of a certain size. For this purpose the plastic material to be recycled is cut into pieces, melted and filtered.

The filters usually utilised for this purpose are made of metal and characterised by 63-297 Microns (50-250 Mesh). The choice of filter depends on the type of plastic material to be recycled (for example PE, PP, LDPE, HDPE, PS, PET, etc.), on the degree of impurity present therein and on the degree of impurity that is to be attained by filtration.

The problem encountered during filtering of molten plastic material is the obstruction of the filter which therefore has to be frequently replaced. For this reason filter apparatus of molten plastic material have been develop, in which the filter can be replaced. A known apparatus in fact comprises an apparatus comprising a filter channel in which the molten plastic material flows. The filter channel has a section in which a plate with two holes can slide, transversally to the channel, in each of which holes a relative disc associated to a filter element is arranged (constituted by a net). The plate can slide horizontally in the section of the channel from a first position in which: a relative first hole is coaxial to the channel and the relative second hole is external of the channel; to a second position in which: the first hole is external of the channel and the second hole is coaxial to the channel. The apparatus comprises pressure measuring means for measuring a pressure internally of the channel, upstream of the plate, and control and command means predisposed, when the pressure measured internally of the filter channel exceeds a determined value, for activating displacing means of the plate from the first to the second position and vice versa. At each position change an operator has to remove the relative disc located externally of the channel, replace the filter element and remount it. Since the pressure increase beyond the threshold can frequently occur, often two operators might be included on different sides of the channel in order to maintain the replacement rhythm high, otherwise the infeed of material would have to be halted.

This apparatus thus requires intensive labour time which means a correlated cost and a high degree of stress as the operators must perform a highly repetitive task, and rapidly. There persists, therefore, a need to continuously filter the molten plastic material to be reliably recycled without the presence of operators.

Document US 6 216 880 discloses a filter apparatus of molten plastic material comprising a body member having at least a filter chamber and a flow path extending between inlet and outlet sides. A filter band transversally extends in said filter chamber, across the flow path. An axially movable valving member comprising a flow passage for the plastic material is provided into the chamber and the filter apparatus comprises an actuator to axially move the valving member between an advanced and a retracted position.

The main aim of the present invention consists in reducing and/or obviating the abovecited disadvantages with respect to the filter apparatus of known type.

In particular, the invention has the aim of filtering the molten plastic material to be recycled without an abundant presence of operators, in a way that is reliable, and in continuous mode.

This aim is obtained according to the filter apparatus of molten plastic material as defined in claim 1.

It is clear that the filter apparatus of the invention limit the need for labour. In fact, operating steps D)-F) are automated and the operator is necessary only to start of the apparatus and for the change of belt when it has been completely obstructed. This happens periodically as a function of the length of the belt with a frequency that is such that the need to have a continual operator presence is not indispensable. Further the belt change can take place,
with the apparatus of the present invention, by fixing (for example by welding) a worn belt end to an end of a new replacement belt.

Further, the apparatus is particularly efficient and reliable.

The characteristics of the invention will be described in the following in which some preferred but not exclusive embodiments will be described with reference to the accompanying tables of drawings, in which:
- figure 1 is a perspective view of an apparatus of the invention;
- figures 2A and 2B are schematic views of the apparatus of figure 1, to which are associated two belts of filtering material, respectively in a first operating step and a second operating step of the apparatus;
- figure 3 is a view from above of the apparatus of figure 1, taken along plane III-III of figure 2A;

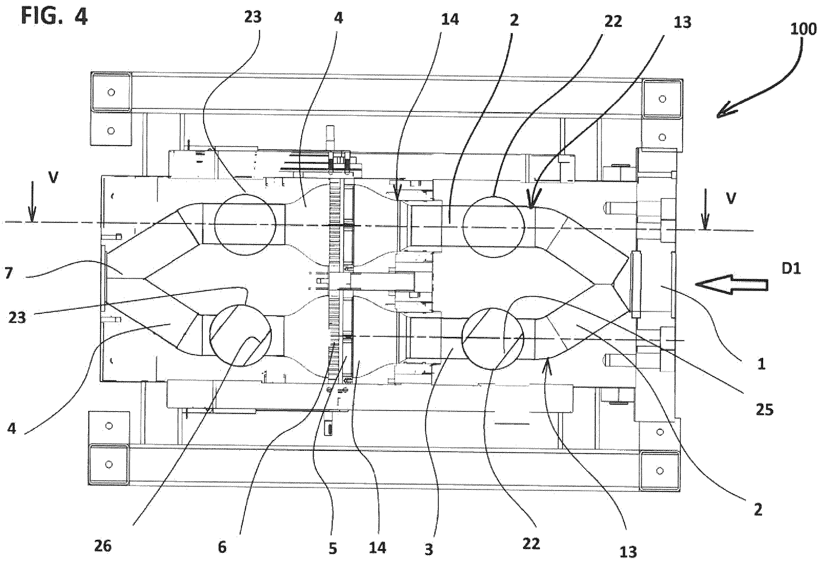

- figure 4 is a longitudinal section view of the apparatus of figure 1 along plane IV-IV of figure 2A and shows, in particular, the relative filter channels;
- figure 5 is a vertical section of the apparatus of figure 1 along plane V-V of figure 4;
- figure 6 is a partially-exploded perspective view of some components of the apparatus of figure 1;
- figures 7A-7F are views, respectively: frontal; upper; rear, with some parts in section view; lateral; in section view along plane VII_{F}- VII_{F} of figure 7C; in section along plane VII_{E}-VII_{E} of figure 7D, of a component of the apparatus according to the invention;
- figures 7G-7H are larger-scale views of details D and C of figure 7C and figure 7F;
- figures 8A-8F are views, respectively: frontal; upper; in section view along plane VIII_{C}-VIII_{C} of figure 8A; lateral; perspective and frontal with some parts in section view, of a further component of the apparatus according to the invention.

The filtering of molten plastic material comprises following operating steps:
A) predisposing an infeed of molten plastic material to be filtered;
B) predisposing at least a filter channel (2) in which a relative flow of molten plastic material in arrival from said infeed is made to slide in a first advancement direction (D1);
C) subdividing the at least a filter channel (2) included into a relative first and second stretch (3, 4), arranged, respectively, upstream and downstream, with respect to the first advancement direction (D1), the first stretch (3) having a relative contact end (5) arranged downstream and the second stretch (4) having a relative contact end (6) arranged upstream, with respect to the first advancement direction (D1);
D) automatically arranging, in the at least a filter channel (2) included, a portion of a belt (8) made of a filtering material for molten plastic materials, in a relative filtering position (2) in which the portion of belt (8) is in contact with the contact ends (5, 6) respectively of the first and second stretch (3, 4) of the at least a filter channel (2) mentioned in step C) for intercepting the flow of molten plastic material with the aim of retaining any solid impurities present in the molten plastic material upstream of the portion of belt (8) with respect to the first advancement direction (D1);
E) automatically measuring the pressure in the first stretch (3) of the at least a filter channel (2) included;
F) automatically comparing a first predetermined reference pressure value with each pressure value measured in the preceding step for, when the pressure value measured in relative at least a filter channel (2) exceeds the first predetermined reference pressure value, automatically replacing the portion of belt (8), automatically distancing the contact end (5) of the first stretch (3) of the relative at least a filter channel (2) from the portion of belt (8), causing the belt (8) to automatically slide along a second advancement direction (D2) in such a way as to arrange a further unobstructed portion of the belt (8) in the filtering position and automatically nearing the contact end (5) of the first stretch (3) of the relative at least a filter channel (2) to the further unobstructed portion of belt (8);
G) reiterating steps E) and F).

Measuring the pressure of the first stretch can take place at predetermined intervals or continuously.

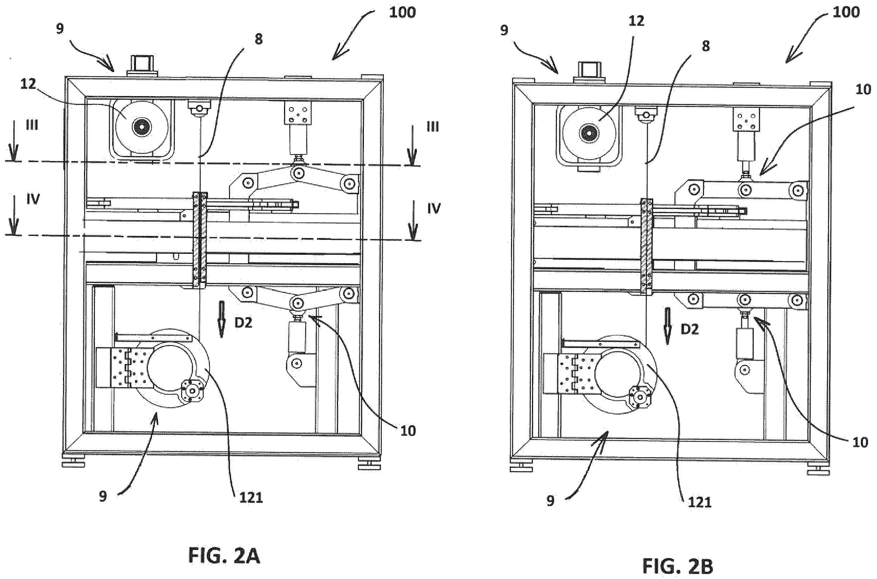

The filter apparatus (100) of molten plastic material according to the invention which enables actuating the operating steps comprises:
- a fixed infeed channel (1) for the infeed of the molten plastic material to be filtered;
- at least a filter channel (2) originating from the infeed channel (1) for passage of a relative flow of molten plastic material coming from the infeed channel (1) along a first advancement direction (D1); in which the at least a filter channel (2) included comprises a relative first stretch (3) and a relative second stretch (4), separate from one another and arranged, respectively, upstream and downstream, with respect to the first advancement direction (D1), the first stretch (3) having a relative contact end (5) arranged downstream with respect to the first advancement direction (D1), and the second stretch (4) having a relative contact end (6) which is fixed, which is arranged upstream of the first advancement direction (D1), and which is opposite the contact end (5) of the first stretch (3);
- a discharge channel (7) into which the second stretch (4) of the at least a filter channel (2) flows;
- for the at least a filter channel (2) included, relative movement means (10) activatable to move the contact end (5) of the first stretch (3) of the relative at least a filter channel (2) along the first advancement direction (D1) in a first and a second and different direction for, when a portion of belt (8) (see figures 2A and 2B) made of a filtering material for molten plastic materials is interposed between the contact end (5, 6) of the first and the second stretch (3, 4) of the relative at least a filter channel (2), positioning the contact end (5) of the first stretch (3), respectively, in a first operating position (see figure 2B) in which, together with the contact end (6) of the second stretch (4), it is able to block the portion of belt (8) in a relative filtering position for filtering the plastic material; and in a second operating position (see figure 2A) in which the contact end (5) of the first stretch (3) is arranged at a distance from the contact end (6) of the second stretch (4) such as to enable the movement of the belt (8) in a second advancement direction (D2) (figures 2A-2B);
- for the at least a filter channel (2) included, relative infeed and advancement means (9) of the belt (8) activatable for, when the contact end (5) of the first stretch (3) of the relative at least a filter channel (2) is positioned in the relative second operating position, feeding the belt (8) along the second advancement direction, so as to interpose a further unobstructed portion of the belt (8) between the contact ends (5, 6) of the first and second stretch of the relative at least a filter channel (2);
- for the at least a filter channel (2) included, pressure measuring means (not illustrated) arranged in the first stretch (3) of the relative at least a filter channel (2) and activatable for automatically measuring the pressure of the first stretch (3);
- control and command means (not illustrated) predisposed for, when the molten plastic material is fed into the apparatus and a relative portion of belt (8) is blocked in a relative filtering position in at least a filter channel (2) included, comparing a first predetermined reference pressure value with each pressure value measured by the relative pressure measuring means, for, when the pressure value measured in the relative at least a filter channel (2) exceeds the first predetermined reference pressure value, carrying out the following sequence of activations: activating the relative movement means (10) for positioning the contact end (5) of the first stretch (3) of the relative at least filter channel (2) in the relative second operating position; activating the relative infeed and advancement means (9) for interposing the further unobstructed portion of the belt (8) between the contact ends (5, 6) of the first and second stretch (3, 4) of the relative at least a filter channel (2); and activating the relative movement means (10) for positioning the contact end (5) of the first stretch (3) of the relative at least a filter channel (2) in the relative first operating position.

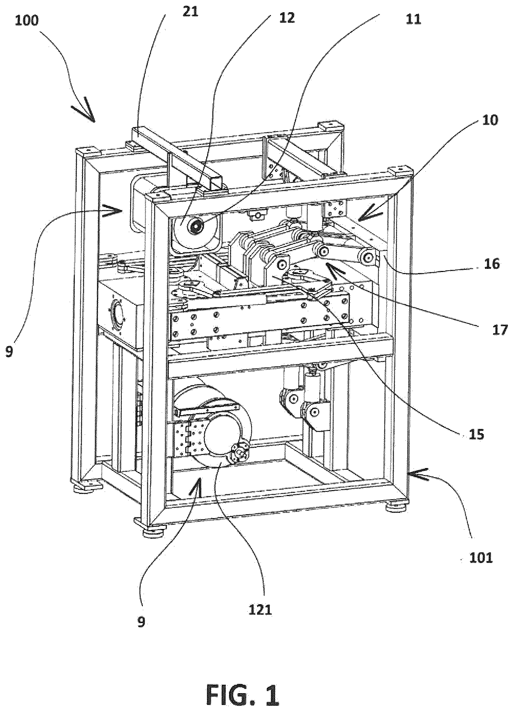

The infeed and advancement means (9) of the belt (8) can preferably comprise: a first roller (11) in which an infeed coil (12) of the belt (8) is fixable; a second roller on which a collecting reel (121) is fixable, on which the various portions of belt (8) wind as they gradually obstruct and means for setting in rotation at least the second roller which, for example, can comprise and electric motor having a relative axis that is coaxial to one of the rollers drawing the second roller in rotation (see figures 1-2B).

The second advancement direction (D2), i.e. that of the belt (8), is advantageously perpendicular to the first advancement direction (D1) which relates to molten plastic material. This simplifies the realisation of the apparatus (100) of the invention.

With the filter apparatus (100), object of the present invention, a single belt can be used for each filter channel (2) present in the apparatus (100).

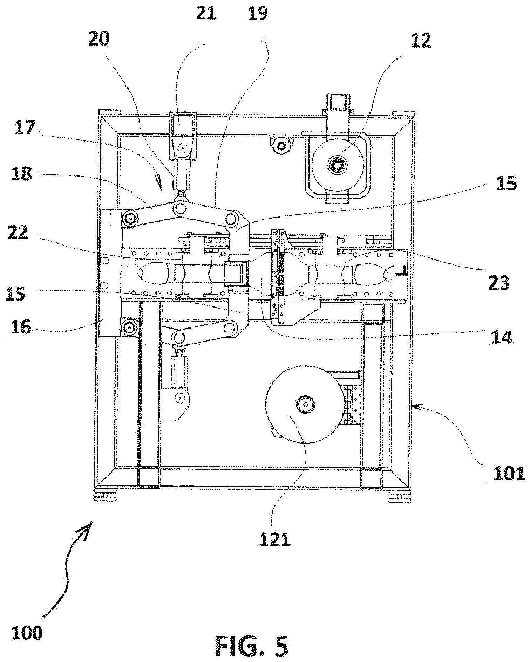

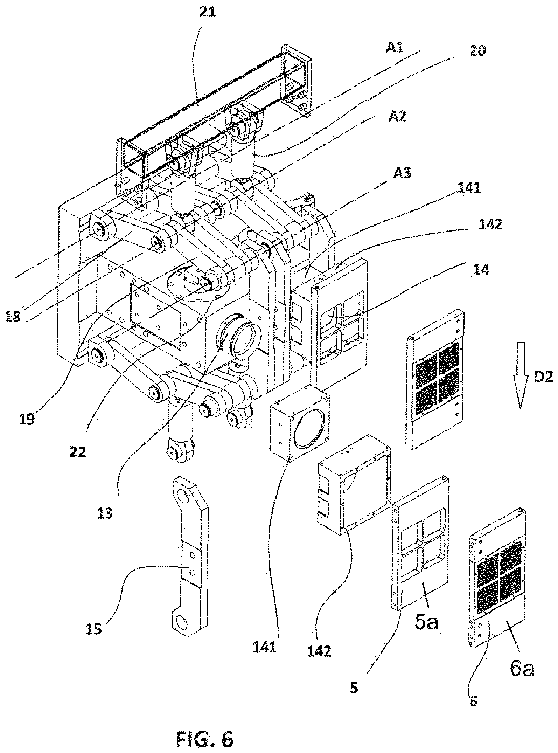

The control and command means can comprise, or be constituted by a control unit or a PLC. In a preferred embodiment the apparatus (100) of the invention, the first stretch (3) of the at least a filter channel (2) included comprises: a first connecting element (15); a first tubing (13) which is fixed and originates from the infeed channel (1); a second tubing (14) telescopically coupled to the first tubing (13) in such a way that a relative end projects from the first tubing (13) downstream thereof, with respect to the first advancement direction (D1); the end of the second tubing (14) identifying the contact end (5) of the first stretch (3) of the at least a filter channel (2) and being solidly fixed to the first connecting element (15); and wherein the movement means (10) of the at least a filter channel (2) included comprise (see figures 5 and 6): a second connecting element (16) which is mounted in such a way as to be solidly constrained to the first tubing (13); at least a toggle joint (17) which in turn comprises: a first bar (18) hinged at a relative end to the second connecting element (16) along a first axis of rotation (A1), which is fixed; and a second bar (19) hinged, at a relative first end, to a second end of the first bar (18), along a second axis of rotation (A2), which is mobile, with a second end of the second bar (19) being hinged along a third axis of rotation (A3), which is mobile, to the first connecting element (15); and displacing means (20) activatable for displacing the second axis of rotation (A2) with consequent displacements of: the third axis of rotation (A3); the first connecting element (15); and the contact end (5) of the first stretch (3) of the at least a filter channel (2). It is clear that this contact end (5) can be moved parallel to the first advancement direction D1.

The first, second and third axis of rotation (A1, A2, A3) are preferably arranged along planes that are perpendicular to the first advancement direction (D1).

The second tubing (14) is advantageously splined on the first tubing (13) and is therefore external thereof. As can be seen in figure 6, the second tubing (14) can comprise (and more preferably is constituted by) a first tubular element (141) (preferably having a circular section) which is solidly fixed to the first connecting element (15), a second tubular element (142) (preferably having a square section) solidly fixed to the first tubular element (141) and a plate (5), fixed to the second tubular element (142) on the opposite side with respect to the first tubular element (141) and identifying the end projecting from the first tubing (13). The pressure measuring means are preferably arranged in the second tubing more preferably at the second tubular element (142).

The displacing means (20) can preferably be constituted by a hydraulic piston (20) (see figure 6) having a relative first end rotatably fixed to the first and second bar (19), with respect to the second rotation axis (A2) and a relative second end which is fixed in such a way as to be solidly constrained to the first tubing (13). In the figures it is fixed to a rod (21) which is a part of the frame (101) of the apparatus (100).

As shown in figures 1, 5, at least two toggle joints (17) are preferably arranged opposite with respect to the first stretch (3) of the filter channel (2). In this way the overall force applied to the contact end (5) of the first stretch (3) can be linear and parallel to the first advancement direction (D1). Therefore forces are avoided which can give rise to torques being applied on parts of the apparatus. In a particular embodiment, the first advancement direction (D1) is horizontal, the second advancement direction (D2) is perpendicular and the two toggle joints (17) are arranged one above and one below the first stretch (3) of the at least a filter channel (2).

In order to prevent, without halting the infeed, the molten plastic material being filtered from escaping from the contact end of the at least first filter channel (2), the apparatus (100) of the invention can include a housing (not present in the apparatus illustrated in the figures), or temporary store, provided with an opening and a closing element of the opening activatable by control and command means with the opening that hydraulically connects the housing to the first stretch (3) of the at least filter channel (2). In this case, the control and command means will be further predisposed to activate the closing element to open before carrying out the sequence of activations and to activate the closing element to close without having carried out the sequence of activations.

For the same purpose, preferably step B) comprises predisposing a plurality of filter channels (2); and in which the
replacement of the relative portion of belt (8) of step F) comprises, prior to the distancing of the end (5) of the first stretch (3) of the relative at least a filter channel (2), intercepting the relative first and second stretch (3, 4) of the at least a filter channel (2) so that during the replacement, the relative flow of molten plastic material is distributed between the remaining filter channels (2) provided. Therefore a further embodiment is preferred of the apparatus (100) comprising a plurality of filter channels (2), and wherein each filter channel (2) included comprises a first and a second flow check valve (22, 23), respectively, in the first and in the second stretch (3, 4) of the filter channel (2), wherein the apparatus (100) comprises, for each filter channel (2) included, relative activating means (24) activatable for opening or closing the relative first and second valve (22, 23) in synchrony, wherein said control and command means are further predisposed for, when in a relative filter channel (2) in which the relative first and second flow check valve (22, 23) are open, the pressure value measured exceeds the first predetermined reference pressure value, activating the activating means (24) for closing the relative first and second valve (22, 23) before carrying out the sequence of activations so that the relative flow of molten plastic material is distributed among the remaining filter channels (2) included and for, after having terminated the sequence of activations, activating the activating means (24) for opening the relative first and second valve (22, 23). In this way the presence of the temporary store is not required and a continuous process is possible.

Preferably, when two filter channels (2) are comprised, as in the illustrated figures, one has greater prevalence over the other so that it is the one which will have the first pressure increase. This difference of prevalence can be simply obtained with an infeed screw for supplying the plastic material into the channel of the inlet (1) and is due to the rotation direction of the infeed screw.

The control and command means can advantageously be further predisposed for comparing each pressure value measured by the relative pressure measuring means also with a second predetermined reference pressure value, higher than the first predetermined reference pressure value, and for when the pressure value measured in a relative filter channel (2) exceeds the second predetermined reference pressure value, activating the activating means (24) to close the relative first and second valve (22, 23). In this way any eventual damage due to overpressure in a filter channel (2) reaching the overpressure while carrying out the replacement of the portion of belt (8) in another filter channel (2) is avoided.

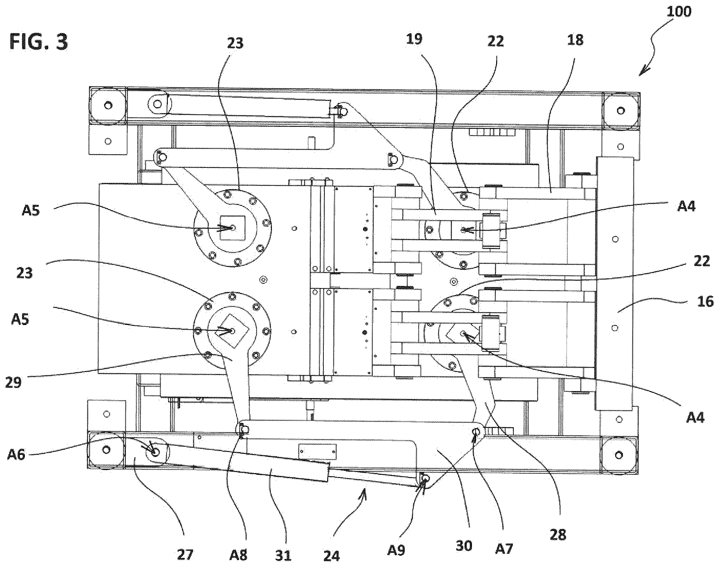

In this embodiment of the apparatus (100), for each filter channel (2) included, the first flow check valve (22) preferably comprises: a first body; and a first obturator (25) rotatably mounted in the first body with respect to a fourth axis of rotation (A4), which is fixed, in order to enable the opening and closing of the first valve (22), and the second flow check valve (23) comprises: a second body; and a second obturator (26) rotatably mounted in the second body with respect to a fifth axis of rotation (A5) for enabling the opening and closing of the second valve (23), the fifth axis of rotation (A5) being: fixed; parallel to the fourth axis of rotation (A4); and arranged at a first fixed distance from the fourth axis of rotation (A4); and wherein the activating means (24) relative to each filter channel (2) comprise: a third connecting element (27), fixed in such a way as to be solidly constrained to the second stretch (4) of the filter channel (2); a hydraulic piston (31) having a relative first end rotatably fixed to the third connecting element (27), with respect to a sixth axis of rotation (A6) which is fixed and parallel to the fourth and fifth axis of rotation (A4, A5); a first lever (28) and a second lever (29) mounted in such a way as to be solidly constrained, respectively, to the first and the second obturator (25, 26) with the relative fulcrum passing, respectively, through a fourth and a fifth axis of rotation (A4, A5); and a fourth connecting element (30) which is, at a relative first point, fixed rotatably to the first lever (28), in a point thereof which is located at a second distance from the relative fulcrum, with respect to a seventh axis of rotation (A7), which is mobile; the fourth connecting element (30) is further, at a relative second point, fixed rotatably to the second lever (29), in a point thereof which is located at a third distance from the relative fulcrum, equal to the second distance, with respect to an eighth axis of rotation (A8), which is mobile; wherein the first and the second point of the fourth connecting element (30) are arranged at a fourth distance equal to the first distance, and wherein the fourth, fifth, seventh and eighth axis of rotation (A4, A5, A7, A8) are parallel to one another, and passing through the vertices of a four-bar hinge having as sides the first, second, fourth and third distance in which the first side is fixed and the remaining sides are mobile, wherein the fourth connecting element (30) is further fixed rotatably, at a relative third point, preferably offset with respect to the first and second point, to a second end of the hydraulic piston (31), with respect to a ninth axis of rotation (A9) which is mobile; and wherein the control and command means are further predisposed for activating the hydraulic piston (31) (see figure 3) with the aim of opening or closing the first and second valve (22, 23) simultaneously.

In a further preferred embodiment, a first and a second side of each of the contact ends (5, 6) of the first and second stretch (3, 4) of the at least a filter channel (2) are cooled, the first and second side being: opposite one another; and arranged, respectively, upstream and downstream with respect to the second advancement direction (D2), with the aim of limiting the escape of molten plastic material in step F) during the replacement of the portion of belt (8).

In a further preferred embodiment, the perimeter zone of the contact end (5, 6) of the first and second stretch (3, 4) of the at least a filter channel (2) is cooled, with the aim of limiting the escape of molten plastic material.

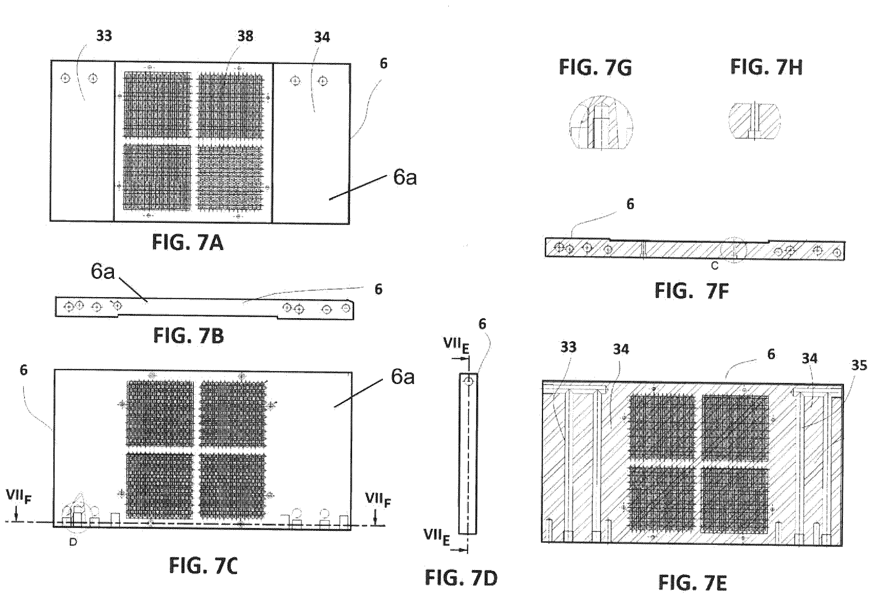

Consequently an apparatus (100) according to the invention, able to carry out the cooling, is particularly advantageous, in which the first and the second stretch (3, 4) of the at least a filter channel (2) comprise, at the relative contact ends (5, 6), respectively, a first perforated plate (5) and a second perforated plate (6) (illustrated in detail in figures 7A-8E), both arranged transversally to the first advancement direction (D1), and having: a respective perforated central portion (32) crossable by the advancing plastic material; at least a first and a second distal portion (33, 34) which are: opposite with respect to the respective perforated central portion (32, 38) arranged, respectively, upstream and downstream with respect to the second advancement direction (D2); and provided with a hydraulic cooling circuit (35); wherein the apparatus (100) further comprises circulation means (not illustrated) activatable for causing a cooling fluid to circulate in the hydraulic cooling circuit (35). This enables limiting the waste of plastic material as the plastic material reaching the first and second side (33, 34) cools and tends to solidify and does not escape during the replacement of the portion of belt (8). The first and second plate (5, 6) function as contact ends (5, 6) of the relative first and second stretch (3, 4) of the at least a filter channel (2).

Alternatively, an apparatus (100) according to the invention, able to carry out the cooling, is particularly advantageous, in which the first and the second stretch (3, 4) of the at least a filter channel (2) comprise, at the relative contact ends (5, 6), respectively, a first perforated plate (5) and a second perforated plate (6), both arranged transversally to the first advancement direction (D1), and having: a respective perforated central portion (32) crossable by the advancing plastic material; at least a perimeter zone; and are provided with a hydraulic cooling circuit (35); wherein the apparatus (100) further comprises circulation means activatable for causing a cooling fluid to circulate in the hydraulic cooling circuit (35).

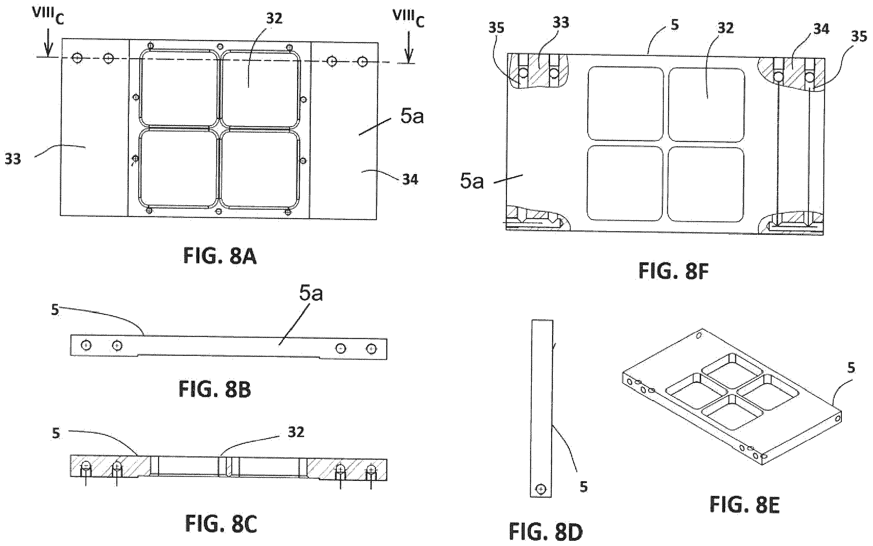

With reference to figures 7A and 8A, the perimeter zone comprises the first distal portion (33) and the second distal portion (34).

During the functioning of the filter apparatus (100) of molten plastic material, the first perforated plate (5) and the second perforated plate (6) tend to overheat. Owing to the increase in pressure that takes place in the filter channel (2) and the overheating of the first perforated plate (5) and the second perforated plate (6), part of the molten plastic material, which should cross the portion of belt (8), might tend to migrate towards the perimeter zone, respectively of the first perforated plate (5) and the second perforated plate (6). Consequently, an undesired escape of molten plastic material might take place from the lateral edges of the first perforated plate (5) and second perforated plate (6), causing escaping of molten plastic material during the functioning of the filter apparatus (100).

The cooling of the perimeter zone, respectively of the first perforated plate (5) and the second perforated plate (6), advantageously tends to block the migration of the molten plastic material towards the lateral edges of the first perforated plate (5) and of the second perforated plate (6), as the molten plastic material will tend to solidify as soon as it encounters the perimeter zone subjected to the cooling.

Consequently, the molten plastic material, which once in contact with the cooled perimeter zone is now in a semisolid phase, creates a barrier to the undesired escape of molten plastic material.

At the time of the replacement of the portion of belt (8), there is once more a cooling of the first perforated plate (5) and the second perforated plate (6) so that, during the advancing of the portion of belt (8), in the second advancement direction (D2), the portion of belt (8) partly encounters the semi-solid plastic material adhering to the first perforated plate (5) and in part draws it away.

As can be observed in figures 7A-7E and 8A-8E, the holed portion (32) of the first plate (5) and the holed portion (38) of the second plate (6) have the same extension and obviously are arranged in such a way as to be opposite one another. The holed portion (32) of the first plate (5) can include a single hole (not illustrated) or a plurality of holes.

The holes of the plurality of holes of the holed portion (32) of the first plate (5) can advantageously have a size of 3-11 cm (preferably 5-10 cm) and can be larger than the holes of the holed portion (38) of the second plate (6). Further, they have a substantially preferably square shape in order to maximise the area occupied by the holes. The holes of the holed portion (38) of the second plate (6), in turn, are larger than those afforded in the belt (8). This enables the second plate (6) and the portion of belt (8), when arranged in the filtering position, not to deform during the filtering of the molten plastic material. The dimensions of the holes of the holed portion (38) of the second plate (6) can preferably have a size of 3-6 cm. The dimensions of the holes of the holed portion (38) of the second plate (6) do not exceed 6 cm.

The apparatus (100) can advantageously comprise cooling means (not illustrated) activatable for cooling the fluid in inlet to the hydraulic cooling circuit (35). Further, a pump (not illustrated) can be included, activatable for causing a cooling fluid to recirculate in the hydraulic cooling circuit (35).

By way of example, the cooling fluid can be water.

When there are more than one filter channels (2), in order to rationalise the replacement of the portion of belt (8), the invention preferably includes, when in step F) the measured pressure value exceeds the first predetermined reference pressure value in at least two filter channels (2), the replacement of the relative portion of belt (8) takes place in one filter channel (2) at a time, giving priority to the filter channel (2) in which the relative pressure value measured is the highest measured.

An apparatus (100) is therefore consequently preferred in which the control and command means are further predisposed for, when the pressure value measured exceeds the first predetermined reference pressure value in at least two filter channels (2), carrying out the sequence of activations in one filter channel (2) at a time, giving priority to the filter channel (2) in which the relative pressure value measured is the highest measured.

The foregoing is understood be have been described by way of non-limiting example, so that any variants of a practical-applicational nature are understood to fall within the protective scope of the invention as claimed in the following.

## Claims

1. A filter apparatus (100) of molten plastic material comprising:
- a fixed infeed channel (1) for the infeed of the molten plastic material to be filtered;
- at least one filter channel (2) originating from the infeed channel (1) for passage of a relative flow of molten plastic material coming from the infeed channel (1) along a first advancement direction (D1); in which the at least one filter channel (2) included comprises a relative first stretch (3) and a relative second stretch (4), separate from one another and arranged, respectively, upstream and downstream, with respect to the first advancement direction (D1), the first stretch (3) having a relative contact end (5) arranged downstream with respect to the first advancement direction (D1), and the second stretch (4) having a relative contact end (6) which is: fixed, arranged upstream of the first advancement direction (D1); and opposite the contact end (5) of the first stretch (3);
- a discharge channel (7) into which the second stretch (4) of the at least a filter channel (2) flows;
- for the at least one filter channel (2) included, relative movement means (10) activatable to move the contact end (5) of the first stretch (3) of the relative at least a filter channel (2) along the first advancement direction (D1) in a first and a second and different direction for, when a portion of belt (8) in a filtering material for molten plastic materials is interposed between the contact end (5, 6) of the first and the second stretch (3, 4) of the relative at least one filter channel (2),
positioning the contact end (5) of the first stretch (3), respectively in a first operating position in which, together with the contact end (6) of the second stretch (4), it is able to block the portion of belt (8) in a relative filtering position for filtering the plastic material; and in a second operating position in which the contact end (5) of the first stretch (3) is arranged at a distance from the contact end (6) of the second stretch (4) such as to enable the movement of the belt (8) in a second advancement direction (D2);
- for the at least a filter channel (2) included, relative infeed and advancement means (9) of the belt (8) activatable for, when the contact end (5) of the first stretch (3) of the relative filter channel (2) is positioned in the relative second operating position, feeding the belt (8) along the second advancement direction, so as to interpose a further unobstructed portion of the belt (8) between the contact ends (5, 6) of the first and second stretch of the relative filter channel (2);
- for the at least one filter channel (2) included, pressure measuring means arranged in the first stretch (3) of the relative at least a filter channel (2) and activatable for automatically measuring the pressure of the first stretch (3);
- control and command means predisposed for, when the molten plastic material is fed into the filter apparatus and a relative portion of belt (8) is blocked in a relative filtering position in at least a filter channel (2) included, comparing a first predetermined reference pressure value with each pressure value measured by the relative pressure measuring means, and for, when the pressure value measured in the relative at least a filter channel (2) exceeds the first predetermined reference pressure value, carrying out the following sequence of activations: activating the relative movement means (10) for positioning the contact end (5) of the first stretch (3) of the relative at least a filter channel (2) in the relative second operating position; activating the relative infeed and advancement means (9) for interposing the further unobstructed portion of the belt (8) between the contact ends (5, 6) of the first and second stretch (3, 4) of the relative at least a filter channel (2); and activating the relative movement means (10) for positioning the contact end (5) of the first stretch (3) of the relative at least one filter channel (2) in the relative first operating position;
wherein the first stretch (3) of the at least one filter channel (2) included comprises:
a first connecting element (15); a first tubing (13) which is fixed and originates from the infeed channel (1); a second tubing (14) telescopically coupled to the first tubing (13) in such a way that a relative end projects from the first tubing (13) downstream thereof, with respect to the first advancement direction (D1); the end of the second tubing (14) identifying the contact end (5) of the first stretch (3) of the relative at least a filter channel (2) and being solidly fixed to the first connecting element (15);
the filter annaratus (100) being **characterised in that** the movement means (10) of the at least one filter channel (2) included comprise: a second connecting element (16) which is mounted in such a way as to be solidly constrained to the first tubing (13); at least two toggle joints (17) arranged opposite with respect to the first stretch (3) of the filter channel (2), each toggle joint (17) in turn comprises: a first bar (18) hinged at a relative end to the second connecting element (16) along a first axis of rotation (A1), which is fixed; and a second bar (19) hinged, at a relative first end, to a second end of the first bar (18), along a second axis of rotation (A2), which is mobile, with a second end of the second bar (19) being hinged along a third axis of rotation (A3), which is mobile, to the first connecting element (15); and displacing means (20) activatable for displacing the second axis of rotation (A2) with consequent displacements of: the third axis of rotation (A3); the first connecting element (15); and the contact end (5) of the first stretch (3) of the at least a filter channel (2) for moving the contact end (5) of the first stretch (3) of the at least a filter channel (2) parallel to the first advancement direction (D1).

2. The filter apparatus (100) of claim 1, wherein the first and the second stretch (3, 4) of the at least one filter channel (2) comprises, at the relative contact ends (5,6), respectively, a first perforated plate (5a) and a second perforated plate (6a), both arranged transversally to the first advancement direction (D1), and having:
a respective perforated central portion (32) crossable by the advancing plastic material; at least a first and a second distal portion (33, 34) which are: opposite with respect to the respective perforated central portion (32) arranged, respectively, upstream and downstream with respect to the second advancement direction (D2); and provided with a hydraulic cooling circuit (35);
wherein the filter apparatus (100) further comprises circulation means activatable for causing a cooling fluid to circulate in the hydraulic cooling circuit (35).

3. The filter apparatus (100) of claim 1, wherein the first and the second stretch (3, 4) of the at least one filter channel (2) comprise, at the relative contact ends (5, 6), respectively, a first perforated plate (5a) and a second perforated plate (6a), both arranged transversally to the first advancement direction (D1), and having: a respective perforated central portion (32) crossable by the advancing plastic material; at least a perimeter zone and having a hydraulic cooling circuit (35); wherein the filter apparatus (100) further comprises circulation means activatable for causing a cooling fluid to circulate in the hydraulic cooling circuit (35).

4. The filter apparatus (100) of claims from 1 to 3, comprising a plurality of filter channels (2), and wherein each filter channel (2) included comprises a first and a second flow check valve (22, 23), respectively, in the first and in the second stretch (4) of the filter channel (2), wherein the filter apparatus (100) comprises, for each filter channel (2) included, relative activating means (24) activatable for opening or closing the relative first and second valve (22, 23) in synchrony, wherein said control and command means are further predisposed for, when in a relative filter channel (2) in which the relative first and second flow check valve (22, 23) are open, the pressure value measured exceeds the first predetermined reference pressure value, activating the activating means (24) for closing the relative first and second valve (22, 23) before carrying out the sequence of activations so that the relative flow of molten plastic material is distributed among the remaining filter channels (2) included and for, after having terminated the sequence of activations, activating the activating means (24) for opening the relative first and second valve (22, 23).

5. The filter apparatus (100) of the preceding claim, wherein, for each filter channel (2) included, the first flow check valve (22) comprises; a first body; and a first obturator (25) rotatably mounted in the first body with respect to a fourth axis of rotation (A4), which is fixed, in order to enable the opening and closing of the first valve (22), and the second flow check valve (23) comprises: a second body; and a second obturator (26) rotatably mounted in the second body with respect to a fifth axis of rotation (A5) for enabling the opening and closing of the second valve (23), the fifth axis of rotation (A5) being: fixed; parallel to the fourth axis of rotation (A4); and arranged at a first fixed distance from the fourth axis of rotation (A4); and wherein the activating means (24) relative to each filter channel (2) comprise:
a third connecting element (27), fixed in such a way as to be solidly constrained to the second stretch (4) of the filter channel (2);
a hydraulic piston (31) having a relative first end rotatably fixed to the third connecting element 27, with respect to a sixth axis of rotation (A6) which is fixed and parallel to the fourth and fifth axis of rotation (A5);
a first lever (28) and a second lever (29) mounted in such a way as to be solidly constrained, respectively, to the first and the second obturator (25, 26) with the relative fulcrum passing, respectively, through the fourth and the fifth axis of rotation (A4, A5);
and a fourth connecting element (30) which is, at a relative first point, fixed rotatably to the first lever (28), in a point thereof which is located at a second distance from the relative fulcrum, with respect to a seventh axis of rotation (A7), which is mobile; the fourth connecting element (30) is further, at a relative second point, fixed rotatably to the second lever (29), in a point thereof which is located at a third distance from the relative fulcrum, equal to the second distance, with respect to an eighth axis of rotation (A8), which is mobile; wherein the relative first point and the relative second point of the fourth connecting element (30) are arranged at a fourth distance equal to the first fixed distance, and wherein the fourth, fifth, seventh and eighth axis of rotation (A4, A5, A7, A8) are parallel to one another, and passing through the vertices of a parallelogram four-bar linkage having as sides the first, second, fourth and third distance in which the first side is fixed and the remaining sides are mobile, wherein the fourth connecting element 30 is further fixed rotatably, at a relative third point, to a second end of the hydraulic piston, with respect to a ninth axis of rotation (A9) which is mobile; and wherein the control and command means are further predisposed for activating the hydraulic piston (31) with the aim of opening or closing the first and second valve (22, 23) simultaneously.

6. The filter apparatus (100) of any one preceding claim from 1 to 5, wherein the control and command means are further predisposed for, when the pressure value measured exceeds the first predetermined reference pressure value in at least two filter channels (2), carrying out the sequence of activations in one filter channel (2) at a time, giving priority to the filter channel (2) in which the relative pressure value measured is the highest measured.

7. The filter apparatus (100) of any one preceding claim from 4 to 6, wherein the control and command means are further predisposed for comparing each pressure value measured by the relative pressure measuring means also with a second predetermined reference pressure value, higher than the first predetermined reference pressure value, and for when the pressure value measured in a relative filter channel (2) exceeds the second predetermined reference pressure value, activating the activating means (24) to close the relative first and second valve (22, 23).

## Patentansprüche

1. Filtriervorrichtung (100) für geschmolzenes Kunststoffmaterial, umfassend:
- einen feststehenden Eintrittskanal (1) für die Zuführung des zu filtrierenden geschmolzenen Kunststoffmaterials;
- zumindest einen Filtrierkanal (2), ausgehend von dem Eintrittskanal (1), für das Durchströmen eines entsprechenden Flusses von geschmolzenem Kunststoffmaterial, das von dem Eintrittskanal (1) entlang einer ersten Vorschubrichtung (D1) zuströmt; wobei der zumindest eine enthaltene Filtrierkanal (2) einen entsprechenden ersten Abschnitt (3) und einen entsprechenden zweiten Abschnitt (4) beinhaltet, die voneinander getrennt und jeweils stromaufwärts beziehungsweise stromabwärts, in Bezug auf die erste Vorschubrichtung (D1), angeordnet sind, wobei der erste Abschnitt (3) ein entsprechendes Kontaktende (5) aufweist, das in Bezug auf die erste Vorschubrichtung (D1) stromabwärts angeordnet ist, und der zweite Abschnitt (4) ein entsprechendes Kontaktende (6) aufweist, das wie folgt beschaffen ist: feststehend, stromaufwärts von der ersten Vorschubrichtung (D1) angeordnet; und gegenüber dem Kontaktende (5) des ersten Abschnitts (3) angeordnet;
- einen Auslasskanal (7), in den der zweite Abschnitt (4) des zumindest einen Filtrierkanals (2) mündet;
- für den zumindest einen enthaltenen Filtrierkanal (2), entsprechende Bewegungsmittel (10), die aktivierbar sind, um das Kontaktende (5) des ersten Abschnitts (3) des entsprechenden zumindest einen Filtrierkanals (2) entlang der ersten Vorschubrichtung (D1) in einer ersten Richtung und einer zweiten und davon verschiedenen Richtung zu bewegen, um, wenn ein Abschnitt eines Bandes (8) aus einem Filtermaterial für geschmolzenes Kunststoffmaterial zwischen den Kontaktenden (5, 6) des ersten und des zweiten Abschnitts (3, 4) des entsprechenden zumindest einen Filtrierkanals (2) angeordnet wird, das Kontaktende (5) des ersten Abschnitts (3) jeweils in einer ersten Arbeitsstellung zu positionieren, in der es, zusammen mit dem Kontaktende (6) des zweiten Abschnitts (4), in der Lage ist, den Abschnitt des Bandes (8) in einer entsprechenden Filtrierposition zum Filtrieren des Kunststoffmaterials zu blockieren; beziehungsweise in einer zweiten Arbeitsstellung zu positionieren, in der das Kontaktende (5) des ersten Abschnitts (3) in einem Abstand von dem Kontaktende (6) des zweiten Abschnitts (4) angeordnet ist, so dass die Bewegung des Bandes (8) in eine zweite Vorschubrichtung (D2) ermöglicht wird,
- für den zumindest einen enthaltenen Filtrierkanal (2), entsprechende Zuführ- und Vorschubmittel (9) des Bandes (8), die aktivierbar sind, um, wenn das Kontaktende (5) des ersten Abschnitts (3) des entsprechenden Filtrierkanals (2) in der entsprechenden zweiten Arbeitsstellung positioniert ist, das Band (8) entlang der zweiten Vorschubrichtung zuzuführen, so dass ein weiterer ungehinderter Abschnitt des Bandes (8) zwischen den Kontaktenden (5, 6) des ersten und des zweiten Abschnitts des entsprechenden Filtrierkanals (2) angeordnet wird,
- für den zumindest einen enthaltenen Filtrierkanal (2), Druckmessmittel, die in dem ersten Abschnitt (3) des entsprechenden zumindest einen Filtrierkanals (2) angeordnet sind und aktivierbar sind, um automatisch den Druck des ersten Abschnitts (3) zu messen;
- Kontroll- und Steuermittel, die dafür vorgesehen sind, wenn das geschmolzene Kunststoffmaterial in die Filtriervorrichtung zugeführt wird und ein entsprechender Abschnitt des Bandes (8) in einer entsprechenden Filtrierposition in dem zumindest einen enthaltenen Filtrierkanal (2) blockiert ist, einen ersten vorgegebenen Referenzdruckwert mit jedem durch die entsprechenden Druckmessmittel gemessenen Druckwert zu vergleichen, und, wenn der in dem entsprechenden zumindest einen Filtrierkanal (2) gemessene Druckwert den ersten vorgegebenen Referenzdruckwert überschreitet, die folgende Sequenz an Aktivierungen durchzuführen: Aktivieren der entsprechenden Bewegungsmittel (10), um das Kontaktende (5) des ersten Abschnitts (3) des entsprechenden zumindest einen Filtrierkanals (2) in der entsprechenden zweiten Arbeitsstellung zu positionieren; Aktivieren der entsprechenden Zuführ- und Vorschubmittel (9), um den weiteren ungehinderten Abschnitt des Bandes (8) zwischen den Kontaktenden (5, 6) des ersten und des zweiten Abschnittes (3, 4) des entsprechenden zumindest einen Filtrierkanals (2) anzuordnen; und Aktivieren der entsprechenden Bewegungsmittel (10), um das Kontaktende (5) des ersten Abschnitts (3) des entsprechenden zumindest einen Filtrierkanals (2) in der entsprechenden ersten Arbeitsstellung zu positionieren,
wobei der erste Abschnitt (3) des zumindest einen enthaltenen Filtrierkanals (2) umfasst:
ein erstes Verbindungselement (15); eine erste Rohrleitung (13), die feststehend ist und von dem Eintrittskanal (1) ausgeht; eine zweite Rohrleitung (14), die derart teleskopartig mit der ersten Rohrleitung (13) verbunden ist, dass ein entsprechendes Ende von der ersten Rohrleitung (13) stromabwärts davon, in Bezug auf die erste Vorschubrichtung (D1) betrachtet, hervorsteht; wobei das Ende der zweiten Rohrleitung (14) das Kontaktende (5) des ersten Abschnitts (3) des entsprechenden zumindest einen Filtrierkanals (2) identifiziert und fest mit dem ersten Verbindungselement (15) verbunden ist;
wobei die Filtriervorrichtung (100) **dadurch gekennzeichnet ist, dass** die Bewegungsmittel (10) des zumindest einen enthaltenen Filtrierkanals (2) umfassen: ein zweites Verbindungselement (16), das derart montiert ist, dass es fest mit der ersten Rohrleitung (13) verbunden ist; zumindest zwei Kniehebelgelenke (17), die bezogen auf den ersten Abschnitt (3) des Filtrierkanals (2) gegenüberliegend angeordnet sind, wobei jedes Kniehebelgelenk (17) wiederum umfasst: eine erste Stange (18), die an einem entsprechenden Ende scharnierbeweglich entlang einer feststehenden ersten Drehachse (A1) an dem zweiten Verbindungselement (16) angelenkt ist; und eine zweite Stange (19), die an einem entsprechenden ersten Ende scharnierbeweglich entlang einer beweglichen zweiten Drehachse (A2) an einem zweiten Ende der ersten Stange (18) angelenkt ist, wobei ein zweites Ende der zweiten Stange (19) scharnierbeweglich entlang einer beweglichen dritten Drehachse (A3) an dem ersten Verbindungselement (15) angelenkt ist; und
Verschiebemittel (20), die aktivierbar sind, um die zweite Drehachse (A2) zu verschieben, wodurch wiederum verschoben werden: die dritte Drehachse (A3); das erste Verbindungselement (15); und das Kontaktende (5) des ersten Abschnitts (3) des zumindest einen Filtrierkanals (2), um das Kontaktende (5) des ersten Abschnitts (3) des zumindest einen Filtrierkanals (2) parallel zu der ersten Vorschubrichtung (D1) zu bewegen.

2. Filtriervorrichtung 100 nach Anspruch 1, wobei der erste und der zweite Abschnitt (3, 4) des zumindest einen Filtrierkanals (2), an den entsprechenden Kontaktenden (5, 6), jeweils umfassen: eine erste perforierte Platte (5a) und eine zweite perforierte Platte (6a), die beide quergerichtet zur ersten Vorschubrichtung (D1) angeordnet sind, und jeweils aufweisen: einen entsprechenden perforierten mittleren Abschnitt (32), der von dem vorgeschobenen Kunststoffmaterial durchquert werden kann; zumindest einen ersten und einen zweiten distalen Abschnitt (33, 34), die wie folgt beschaffen sind: einander gegenüberliegend in Bezug auf den entsprechenden perforierten mittleren Abschnitt (32) und jeweils stromaufwärts und stromabwärts in Bezug auf die zweite Vorschubrichtung (D2) angeordnet; und einen hydraulischen Kühlkreislauf (35) aufweisend; wobei die Filtriervorrichtung (100) ferner Umlaufmittel umfasst, die aktivierbar sind, um den Umlauf eines Kühlmittels im hydraulischen Kühlkreislauf (35) zu bewirken.

3. Filtriervorrichtung (100) nach Anspruch 1, wobei der erste und der zweite Abschnitt (3, 4) des zumindest einen Filtrierkanals (2), an den entsprechenden Kontaktenden (5, 6), jeweils umfassen: eine erste perforierte Platte (5a) und eine zweite perforierte Platte (6a), die beide quergerichtet zur ersten Vorschubrichtung (D1) angeordnet sind, und jeweils aufweisen: einen entsprechenden perforierten mittleren Abschnitt (32), der von dem vorgeschobenen Kunststoffmaterial durchquert werden kann; zumindest eine Umfangszone und einen hydraulischen Kühlkreislauf (35) aufweisend; wobei die Filtriervorrichtung (100) ferner Umlaufmittel umfasst, die aktivierbar sind, um den Umlauf eines Kühlmittels in dem hydraulischen Kühlkreislauf (35) zu bewirken.

4. Filtriervorrichtung (100) nach den Ansprüchen von 1 bis 3, umfassend eine Vielzahl von Filtrierkanälen (2), und wobei jeder enthaltene Filtrierkanal (2) ein erstes und ein zweites Durchflusssperrventil (22, 23), jeweils in dem ersten (3) und in dem zweiten Abschnitt (4) des Filtrierkanals (2), umfasst, wobei die Filtriervorrichtung (100), für jeden enthaltenen Filtrierkanal (2), entsprechende Aktivierungsmittel (24) umfasst, die aktivierbar sind, um das entsprechende erste und zweite Ventil (22, 23) synchron zu öffnen oder zu schließen, wobei die Kontroll- und Steuermittel ferner dafür ausgelegt sind, wenn in einem entsprechenden Filtrierkanal (2), in dem das entsprechende erste und zweite Durchflusssperrventil (22, 23) offen sind, der gemessene Druckwert den ersten vorgegebenen Referenzdruckwert überschreitet, die Aktivierungsmittel (24) zu aktivieren, um das entsprechende erste und zweite Ventil (22, 23) zu schließen, bevor die Sequenz der Aktivierungen ausgeführt wird, so dass der entsprechende Fluss des geschmolzenen Kunststoffmaterials auf die verbleibenden enthaltenen Filtrierkanäle (2) verteilt wird, und um, nachdem die Sequenz der Aktivierungen beendet ist, die Aktivierungsmittel (24) zu aktivieren, um das entsprechende erste und zweite Ventil (22, 23) zu öffnen.

5. Filtriervorrichtung (100) nach dem vorhergehenden Anspruch, wobei, für jeden enthaltenen Filtrierkanal (2), das erste Durchflusssperrventil (22) umfasst: einen ersten Körper; und ein erstes Absperrorgan (25), das um eine feststehende vierte Drehachse (A4) drehbar in dem ersten Körper montiert ist, um das Öffnen und Schließen des ersten Ventils (22) zu ermöglichen, und wobei das zweite Durchflusssperrventil (23) umfasst: einen zweiten Körper; und ein zweites Absperrorgan (26), das um eine fünfte Drehachse (A5) drehbar in dem zweiten Körper montiert ist, um das Öffnen und Schließen des zweiten Ventils (23) zu ermöglichen, wobei die fünfte Drehachse (A5) wie folgt beschaffen ist: feststehend, parallel zu der vierten Drehachse (A4); und in einem ersten festen Abstand von der vierten Drehachse (A4) angeordnet; und wobei die Aktivierungsmittel (24) für jeden Filtrierkanal (2) umfassen:
ein drittes Verbindungselement (27), das derart festgelegt ist, dass es fest mit dem zweiten Abschnitt (4) des Filtrierkanals (2) verbunden ist;
einen hydraulischen Kolben (31), aufweisend ein entsprechendes erstes Ende, das um eine sechste Drehachse (A6) drehbar, die feststehend und parallel zu der vierten und fünften Drehachse (A4, A5) ist, an dem dritten Verbindungselement (27) befestigt ist;
einen ersten Hebel (28) und einen zweiten Hebel (29), die derart montiert sind, dass sie jeweils fest mit dem ersten und dem zweiten Absperrorgan (25, 26) verbunden sind, wobei der entsprechende Drehpunkt jeweils durch die vierte und die fünfte Drehachse (A4, A5) verläuft;
und ein viertes Verbindungselement (30), das, an einem entsprechenden ersten Punkt, drehbar um eine bewegliche siebte Drehachse (A7), an dem ersten Hebel (28) befestigt ist, an einem Punkt davon, der in einem zweiten Abstand von dem entsprechenden Drehpunkt angeordnet ist;
wobei das vierte Verbindungselement (30) ferner, an einem entsprechenden zweiten Punkt, drehbar um eine bewegliche achte Drehachse (A8), an dem zweiten Hebel (29) befestigt ist, an einem Punkt davon, der in einem dritten Abstand von dem entsprechenden Drehpunkt angeordnet ist, der gleich dem zweiten Abstand ist; wobei der entsprechende erste Punkt und der entsprechende zweite Punkt des vierten Verbindungselements (30) in einem vierten Abstand angeordnet sind, der gleich dem ersten festen Abstand ist, und wobei die vierte, fünfte, siebte und achte Drehachse (A4, A5, A7, A8) parallel zueinander sind und durch die Eckpunkte eines Parallelogramm-Viergelenks verlaufen, das als Seiten den ersten, zweiten, vierten und dritten Abstand aufweist, wobei die erste Seite feststehend ist und die restlichen Seiten beweglich sind, wobei das vierte Verbindungselement (30) ferner, an einem entsprechenden dritten Punkt, drehbar um eine bewegliche neunte Drehachse (A9), an einem zweiten Ende des hydraulischen Kolbens befestigt ist; und wobei die Kontroll- und Steuermittel ferner dafür ausgelegt sind, den hydraulischen Kolben (31) zu aktivieren, um das erste und das zweite Ventil (22, 23) gleichzeitig zu öffnen oder zu schließen.

6. Filtriervorrichtung (100) nach einem der vorhergehenden Ansprüche von 1 bis 5, wobei die Kontroll- und Steuermittel ferner dafür ausgelegt sind, wenn der gemessene Druckwert den ersten vorgegebenen Referenzdruckwert in zumindest zwei Filtrierkanälen (2) überschreitet, die Sequenz der Aktivierungen in jeweils nur einem Filtrierkanal (2) auszuführen, und zwar vorrangig in dem Filtrierkanal (2), in dem der entsprechende gemessene Druckwert am höchsten ist.

7. Filtriervorrichtung (100) nach einem der vorhergehenden Ansprüche von 4 bis 6, wobei die Kontroll- und Steuermittel ferner dafür ausgelegt sind, jeden von den entsprechenden Druckmessmitteln gemessenen Druckwert auch mit einem zweiten vorgegebenen Referenzdruckwert zu vergleichen, der höher ist als der erste vorgegebene Referenzdruckwert, und, wenn der in einem entsprechenden Filtrierkanal (2) gemessene Druckwert den zweiten vorgegebenen Referenzdruckwert überschreitet, die Aktivierungsmittel (24) zu aktivieren, um das entsprechende erste und zweite Ventil (22, 23) 'zu schließen.

## Revendications

1. Un appareil (100) de filtrage de matériau plastique fondu comprenant :
- un canal d'entrée (1) fixe pour l'alimentation du matériau plastique fondu à filtrer ;
- au moins un canal de filtrage (2) partant du canal d'entrée (1) pour le passage d'un flux correspondant de matériau plastique fondu provenant du canal d'entrée (1) le long d'une première direction d'avance (D1) ; où ledit au moins un canal de filtrage (2) prévu comprend un premier tronçon (3) relatif et un deuxième tronçon (4) relatif, séparés l'un de l'autre et disposés, respectivement, en amont et en aval, par rapport à la première direction d'avance (D1), le premier tronçon (3) ayant une extrémité de contact (5) relative disposée en aval par rapport à la première direction d'avance (D1), et le deuxième tronçon (4) ayant une extrémité de contact (6) relative qui est: fixe, disposée en amont de la première direction d'avance (D1) ; et opposée à l'extrémité de contact (5) du premier tronçon (3) ;
- un canal d'évacuation (7) dans lequel conflue le deuxième tronçon (4) dudit au moins un canal de filtrage (2) ;
- pour ledit au moins un canal de filtrage (2) prévu, des moyens de déplacement (10) relatifs pouvant être actionnés pour déplacer l'extrémité de contact (5) du premier tronçon (3) dudit au moins un canal de filtrage (2) relatif le long de la première direction d'avance (D1) dans un premier sens et un deuxième sens différent pour, lorsqu'une portion de bande (8) réalisée dans un matériau filtrant pour matériaux plastiques fondus est interposée entre l'extrémité de contact (5, 6) du premier et du deuxième tronçon (3, 4) dudit au moins un canal de filtrage (2) relatif, positionner l'extrémité de contact (5) du premier tronçon (3), respectivement dans une première position opérationnelle dans laquelle, conjointement avec l'extrémité de contact (6) du deuxième tronçon (4), elle est à même de bloquer la portion de bande (8) dans une position de filtrage relative pour filtrer le matériau plastique ; et dans une deuxième position opérationnelle dans laquelle l'extrémité de contact (5) du premier tronçon (3) est disposée à une distance de l'extrémité de contact (6) du deuxième tronçon (4) de manière à permettre le déplacement de la bande (8) dans une deuxième direction d'avance (D2) ;
- pour ledit au moins un canal de filtrage (2) prévu, des moyens (9) relatifs d'alimentation et d'avance de la bande (8) pouvant être actionnés pour, lorsque l'extrémité de contact (5) du premier tronçon (3) du canal de filtrage (2) relatif est positionnée dans la deuxième position opérationnelle relative, alimenter la bande (8) le long de la deuxième direction d'avance, de manière à interposer une autre portion non bouchée de la bande (8) entre les extrémités de contact (5, 6) du premier et du deuxième tronçon du canal de filtrage (2) relatif ;
- pour ledit au moins un canal de filtrage (2) prévu, des moyens de mesure de pression disposés dans le premier tronçon (3) dudit au moins un canal de filtrage (2) relatif et pouvant être actionnés pour mesurer automatiquement la pression du premier tronçon (3) ;
- des moyens de contrôle et de commande prédisposés pour, lorsque le matériau plastique fondu est alimenté dans l'appareil de filtrage et qu'une portion de bande (8) relative est bloquée dans une position de filtrage relative dans ledit au moins un canal de filtrage (2) prévu, comparer une première valeur prédéfinie de pression de référence avec chaque valeur de pression mesurée par les moyens de mesure de pression relatifs, et pour, lorsque la valeur de pression mesurée dans ledit au moins un canal de filtrage (2) relatif dépasse la première valeur prédéfinie de pression de référence, exécuter la séquence suivante d'actionnements : actionner les moyens de déplacement (10) relatifs pour positionner l'extrémité de contact (5) du premier tronçon (3) dudit au moins un canal de filtrage (2) relatif dans la deuxième position opérationnelle relative ; actionner les moyens d'alimentation et d'avance (9) relatifs pour interposer l'autre portion non bouchée de la bande (8) entre les extrémités de contact (5, 6) du premier et du deuxième tronçon (3, 4) dudit au moins un canal de filtrage (2) relatif ; et actionner les moyens de déplacement (10) relatifs pour positionner l'extrémité de contact (5) du premier tronçon (3) dudit au moins un canal de filtrage (2) relatif dans la première position opérationnelle relative ;
où le premier tronçon (3) dudit au moins un canal de filtrage (2) prévu comprend :
un premier élément de raccordement (15) ; une première conduite (13) qui est fixe et part du canal d'entrée (1) ; une deuxième conduite (14) accouplée de façon télescopique avec la première conduite (13) de manière à ce qu'une extrémité relative dépasse de la première conduite (13) en aval de celle-ci, par rapport à la première direction d'avance (D1) ; l'extrémité de la deuxième conduite (14) identifiant l'extrémité de contact (5) du premier tronçon (3) dudit au moins un canal de filtrage (2) relatif et étant fixée de façon solidaire au premier élément de raccordement (15) ;
l'appareil de filtrage (100) étant **caractérisé en ce que** les moyens de déplacement (10) dudit au moins un canal de filtrage (2) prévu comprennent : un deuxième élément de raccordement (16) qui est monté de manière à être assujetti de façon solidaire à la première conduite (13) ; au moins deux articulations à genouillère (17) disposées opposées par rapport au premier tronçon (3) du canal de filtrage (2), chaque articulation à genouillère (17) comprend à son tour : une première barre (18) articulée au niveau d'une extrémité relative au deuxième élément de raccordement (16) le long d'un premier axe de rotation (A1), qui est fixe ; et une deuxième barre (19) articulée, au niveau d'une première extrémité relative, à une deuxième extrémité de la première barre (18), le long d'un deuxième axe de rotation (A2), qui est mobile, avec une deuxième extrémité de la deuxième barre (19) qui est articulée le long d'un troisième axe de rotation (A3), qui est mobile, au premier élément de raccordement (15) ; et des moyens de déplacement (20) pouvant être actionnés pour déplacer le deuxième axe de rotation (A2) avec déplacements conséquents : du troisième axe de rotation (A3) ; du premier élément de raccordement (15) ; et de l'extrémité de contact (5) du premier tronçon (3) dudit au moins un canal de filtrage (2) pour déplacer l'extrémité de contact (5) du premier tronçon (3) dudit au moins un canal de filtrage (2) parallèlement à la première direction d'avance (D1).

2. L'appareil de filtrage (100) selon la revendication 1, dans lequel le premier et le deuxième tronçon (3, 4) dudit au moins un canal de filtrage (2) comprend, au niveau des extrémités de contact (5, 6) relatives, respectivement, une première plaque perforée (5a) et une deuxième plaque perforée (6a), toutes deux disposées transversalement à la première direction d'avance (D1), et ayant : une portion centrale perforée (32) respective pouvant être traversée par le matériau plastique qui avance ; au moins une première et une deuxième portions distales (33, 34) qui sont : opposées par rapport à la portion centrale perforée (32) respective disposée, respectivement, en amont et en aval par rapport à la deuxième direction d'avance (D2) ; et dotées d'un circuit hydraulique de refroidissement (35) ; dans lequel l'appareil de filtrage (100) comprend en outre des moyens de circulation pouvant être actionnés pour faire circuler un fluide de refroidissement dans le circuit hydraulique de refroidissement (35).

3. L'appareil de filtrage (100) selon la revendication 1, dans lequel le premier et le deuxième tronçons (3, 4) dudit au moins un canal de filtrage (2) comprennent, au niveau des extrémités de contact (5, 6) relatives, respectivement, une première plaque perforée (5a) et une deuxième plaque perforée (6a), toutes deux disposées transversalement à la première direction d'avance (D1), et ayant : une portion centrale perforée (32) respective pouvant être traversée par le matériau plastique qui avance ; au moins une zone périphérique et ayant un circuit hydraulique de refroidissement (35) ; dans lequel l'appareil de filtrage (100) comprend en outre des moyens de circulation pouvant être actionnés pour faire circuler un fluide de refroidissement dans le circuit hydraulique de refroidissement (35).

4. L'appareil de filtrage (100) selon les revendications de 1 à 3, comprenant une pluralité de canaux de filtrage (2), et dans lequel chaque canal de filtrage (2) prévu comprend une première et une deuxième soupape d'arrêt de flux (22, 23), respectivement, dans le premier (3) et dans le deuxième (4) tronçon du canal de filtrage (2), dans lequel l'appareil de filtrage (100) comprend, pour chaque canal de filtrage (2) prévu, des moyens d'activation (24) relatifs pouvant être actionnés pour ouvrir ou fermer en synchronisation la première et la deuxième soupape (22, 23) relative, dans lequel lesdits moyens de contrôle et de commande sont en outre prédisposés pour, lorsque dans un canal de filtrage (2) relatif où les première et deuxième soupapes d'arrêt de flux (22, 23) sont ouvertes, la valeur de pression mesurée dépasse la première valeur prédéfinie de pression de référence, actionner les moyens d'activation (24) pour fermer les première et deuxième soupapes (22, 23) relatives avant d'exécuter la séquence d'actionnements de manière à ce que le flux relatif de matériau plastique fondu se répartisse parmi les canaux de filtrage (2) prévus restants et pour, après avoir terminé la séquence d'actionnements, actionner les moyens d'activation (24) pour ouvrir les première et deuxième soupapes (22, 23) relatives.

5. L'appareil de filtrage (100) selon la revendication précédente, dans lequel, pour chaque canal de filtrage (2) prévu, la première soupape d'arrêt de flux (22) comprend : un premier corps ; et un premier obturateur (25) monté de façon rotative dans le premier corps par rapport à un quatrième axe de rotation (A4), qui est fixe, de manière à permettre l'ouverture et la fermeture de la première soupape (22), et la deuxième soupape d'arrêt de flux (23) comprend : un deuxième corps ; et un deuxième obturateur (26) monté de façon rotative dans le deuxième corps par rapport à un cinquième axe de rotation (A5) pour permettre l'ouverture et la fermeture de la deuxième soupape (23), le cinquième axe de rotation (A5) étant : fixe, parallèle au quatrième axe de rotation (A4) ; et disposé à une première distance fixe du quatrième axe de rotation (A4) ; et dans lequel les moyens d'activation (24) relatifs à chaque canal de filtrage (2) comprennent :
un troisième élément de raccordement (27), fixé de manière à être assujetti de façon solidaire au deuxième tronçon (4) du canal de filtrage (2) ;
un piston hydraulique (31) ayant une première extrémité relative fixée de façon rotative au troisième élément de raccordement (27), par rapport à un sixième axe de rotation (A6) qui est fixe et parallèle aux quatrième et cinquième axes de rotation (A4, A5) ;
un premier levier (28) et un deuxième levier (29) montés de manière à être assujettis de façon solidaire, respectivement, au premier et au deuxième obturateur (25, 26) avec le point d'appui relatif passant, respectivement, par le quatrième et le cinquième axe de rotation (A4, A5) ;
et un quatrième élément de raccordement (30) qui est, au niveau d'un premier point relatif, fixé de façon rotative au premier levier (28), en un point de celui-ci qui est situé à une deuxième distance du point d'appui relatif, par rapport à un septième axe de rotation (A7), qui est mobile ; le quatrième élément de raccordement (30) est en outre, au niveau d'un deuxième point relatif, fixé de façon rotative au deuxième levier (29), en un point de celui-ci qui est situé à une troisième distance du point d'appui relatif, égale à la deuxième distance, par rapport à un huitième axe de rotation (A8), qui est mobile ; dans lequel le premier point relatif et le deuxième point relatif du quatrième élément de raccordement (30) sont disposés à une quatrième distance égale à la première distance fixe, et dans lequel les quatrième, cinquième, septième et huitième axes de rotation (A4, A5, A7, A8) sont parallèles entre eux, et passent par les sommets d'un parallélogramme articulé ayant comme côtés la première, deuxième, quatrième et troisième distance où le premier côté est fixe et les côtés restants sont mobiles ; dans lequel le quatrième élément de raccordement (30) est en outre fixé de façon rotative, au niveau d'un troisième point relatif, à une deuxième extrémité du piston hydraulique, par rapport à un neuvième axe de rotation (A9) qui est mobile ; et dans lequel les moyens de contrôle et de commande sont en outre prédisposés pour actionner le piston hydraulique (31) afin d'ouvrir ou de fermer les première et deuxième soupapes (22, 23) simultanément.

6. L'appareil de filtrage (100) selon l'une quelconque des revendications précédentes de 1 à 5, dans lequel les moyens de contrôle et de commande sont en outre prédisposés pour, lorsque la valeur de pression mesurée dépasse la première valeur prédéfinie de pression de référence dans au moins deux canaux de filtrage (2), exécuter la séquence d'actionnements dans un canal de filtrage (2) à la fois, en donnant priorité au canal de filtrage (2) dans lequel la valeur de pression mesurée relative est la plus élevée mesurée.

7. L'appareil de filtrage (100) selon l'une quelconque des revendications précédentes de 4 à 6, dans lequel les moyens de contrôle et de commande sont en outre prédisposés pour comparer chaque valeur de pression mesurée par les moyens de mesure de pression relatifs également avec une deuxième valeur prédéfinie de pression de référence, supérieure à la première valeur prédéfinie de pression de référence, et pour, lorsque la valeur de pression mesurée dans un canal de filtrage (2) relatif dépasse la deuxième valeur prédéfinie de pression de référence, actionner les moyens d'activation (24) pour fermer les première et deuxième soupapes (22, 23) relatives.
